# EUROPÄISCHE PATENTSCHRIFT

(11) **EP 3 258 289 B1**
(45) Veröffentlichungstag und Bekanntmachung des Hinweises auf die Patenterteilung: **27.03.2019**
(21) Anmeldenummer: 17169401.1
(22) Anmeldetag: 04.05.2017
(51) Int. Cl.: G01S 7/521, B22D 17/22

(54) **VERFAHREN ZUR BEFESTIGUNG EINES HALTERS FÜR EINEN SENSOR AN EINER VERKLEIDUNG FÜR EIN FORTBEWEGUNGSMITTEL**
METHOD FOR ATTACHING A HOLDER FOR ONE SENSOR ON A CLADDING FOR A MEANS OF LOCOMOTION
PROCÉDÉ DE FIXATION D'UN SUPPORT POUR UN CAPTEUR SUR UN REVÊTEMENT POUR UN MOYEN DE DÉPLACEMENT

(30) Priorität: 13.06.2016 DE 102016210436
(43) Veröffentlichungstag der Anmeldung: 20.12.2017
(73) Patentinhaber: Robert Bosch GmbH, 70442 Stuttgart (DE)
(72) Erfinder: Karl, Matthias, 76275 Ettlingen (DE)

(56) Entgegenhaltungen:
- EP-A1- 2 366 519
- EP-A2- 2 924 398
- WO-A1-2014/016295
- DE-U1-202011 052 507

## Beschreibung

### Stand der Technik

Die vorliegende Erfindung betrifft ein Verfahren zur Befestigung eines Halters für einen Sensor an einer Verkleidung für ein Fortbewegungsmittel. Insbesondere betrifft die vorliegende Erfindung eine zuverlässige und dauerhaltbare Schmelzverbindung zwischen der Halterung und der Verkleidung.

Fahrzeugverkleidungen bestehen häufig aus weichem Kunststoff, der sich bereits bei relativ niedrigen Temperaturen verflüssigt bzw. schmilzt. Zur Gewichtseinsparung werden entsprechende Fahrzeugverkleidungen lediglich so dick wie notwendig ausgeführt. Eine dauerhaltbare Befestigung im automobilen Bereich eingesetzter Sensoren (z. B. Ultraschallsensoren für die Umfelderkennung) ist aufgrund der Umgebungsbedingungen allein mittels Klebstoff häufig nicht ausreichend. Beim Verschweißen von Kunststoffbauteilen besteht ein Zielkonflikt zwischen einer hinreichend großen Vermischung der angeschmolzenen Bestandteile und einer optisch unvorteilhaften, da zu umfassenden Aufschmelzung der Bestandteile.

Aus fertigungstechnischen Gründen werden die Vorrichtungen zum Halten der Sensoren an der Fahrzeugverkleidung meist erst nach der Herstellung der Fahrzeugverkleidung an der Fahrzeugverkleidung befestigt. Die Bestandteile des Halters sind dabei zumeist ein Schaft zur Aufnahme der Sensoren, der üblicherweise parallel zur Hauptachse (Hauptabstrahlrichtung) des Sensors orientiert ist und eine Halterungs- bzw. Grundplatte, welche an der Innenseite der Fahrzeugverkleidung zumeist parallel zur Oberfläche der Fahrzeugverkleidung orientiert und an der Verbauposition mit der Fahrzeugverkleidung befestigt ist. Bedarfsweise kann am Übergang zwischen der Grundplatte und dem Schaft ein Bereich vorhanden sein, der die Position des Schafts auf der Grundplatte stabilisiert und eine mechanische Versteifung bietet. Der Schaft kann insbesondere eine größere Länge aufweisen, als die Länge der Grundplatte in Richtung der Kontaktoberfläche mit der Verkleidung. Der Schaft kann mehrere (zwei, drei, vier oder mehr) Haltearme aufweisen, welche insbesondere elastisch ausgestaltet sind und einen zwischen ihnen aufzunehmenden Sensor zumindest anteilig umklammern. Hierzu können die distalen Enden der Haltearme Formschlusselemente bzw. Krallen oder Schnapp-/Rast-Elemente aufweisen, welche in korrespondierende Ausnehmungen des Sensors eingreifen oder den Sensor auf einer zur Grundplatte gegenüberliegenden Oberfläche umgreifen.

Aus der Automobilpraxis ist bekannt, dass in bevorzugten Ausprägungen Aktoren, wie z. B. Leuchten, Sensoren etc. auf der Innenseite von Fahrzeugverkleidungen zumindest durch einen Staubschutz (z. B. umfassend ein Gummi) geschützt sind bzw. durch deckelartige Vorrichtungen bspw. mittels Bajonettverschluss am Schaft fixiert sind. Dabei werden die Aktoren bspw. mittels einer Feder in die Halterung gedrückt und durch diese innerhalb der Halterung positioniert. Die Federn können aus Metall, Kunststoff etc. ausgestaltet sein.

Zur Befestigung des Halters an der Fahrzeugverkleidung wird heutzutage mitunter das Torsionsschweißen verwendet. Dabei wird die Halterung in rotatorische Schwingungen um eine zentrische Rotationsachse (z. B. mit Ultraschallfrequenz) versetzt wobei aufgrund der Reibung zwischen der Halterung und der Innenseite der Fahrzeugverkleidung eine lokale Erwärmung erfolgt. Diese führt zum Schmelzen von dort vorhandenen Kunststoffen, woraufhin sich die Halterung bzw. die Grundplatte mit der Innenseite der Fahrzeugverkleidung verbindet. Nachteilig am Torsionsschweißen um eine feststehende Rotationsachse ist, dass die jeweilige Relativgeschwindigkeit der gegeneinander bewegten Körper vom Radius zur Rotationsachse abhängt. In der Patentliteratur werden daher häufig Ringkonstruktionen verwendet, bei welchen die Radien innerhalb des Kontaktbereiches nur in relativ kleinen Toleranzbereichen variieren. Dies verringert zwar die Varianz der erzeugten Temperaturen, verringert jedoch ebenfalls die mögliche Anlagefläche zwischen Grundplatte und Fahrzeugverkleidung.

WO2014/016295 offenbart ein Verfahren zur Befestigung eines Halters für einen Sensor an einer Verkleidung, wobei der Halter und/oder die Verkleidung zumindest anteilig aus Kunststoff gefertigt ist bzw. sind. Die Befestigung des Halters an der Verkleidung erfolgt durch einen geeigneten Klebstoff. EP2366519 offenbart das Anschmelzen eines Kunststoffes mit Hilfe einer elektroresistiven Struktur.

Es ist eine Aufgabe der vorliegenden Erfindung, eine geeignete Verbindung zwischen einem Halter für einen Sensor und einer Verkleidung für ein Fortbewegungsmittel bereitzustellen. Diese soll möglichst hochwertig (dauerhaltbar) und dennoch optisch unauffällig sein.

### Offenbarung der Erfindung

Die vorstehend identifizierte Aufgabe wird erfindungsgemäß durch ein Verfahren nach Anspruch 1 gelöst. Der Sensor kann bspw. ein Ultraschallsensor (Ultraschall-Sende-Empfänger), ein Radarsensor, ein optischer Sensor o. ä. sein. Insbesondere kann der Sensor zur Sammlung von Informationen über das Umfeld eines Fortbewegungsmittels ausgestaltet sein. Der Halter oder die Verkleidung sind zumindest anteilig aus Kunststoff gefertigt. Mit anderen Worten bringt zumindest der Halter oder die Verkleidung dasjenige Material mit, welches durch einen Wärmeeintrag zur gegenseitigen Befestigung aufgeschmolzen werden kann. Zunächst wird eine vordefinierte elektroresistive Struktur auf den Halter und/oder die Verkleidung aufgebracht. Die elektroresistive Struktur kann einen Bestandteil des Halters und/oder der Verkleidung bilden oder zusätzlich zum Halter und der Verkleidung vorgesehen werden. Der Halter kann bspw. eine Verkleidung für einen Stoßfänger eines Fortbewegungsmittels sein. Alternativ oder zusätzlich kann der Halter eine Verkleidung einer Außenhaut eines Fortbewegungsmittels sein. Ein Beispiel hierfür ist eine Außenspiegelverkleidung. Weitere Beispiele sind die Verkleidung einer A-/B-/C-/D-Säule eines Fortbewegungsmittels oder ein Spoiler/Diffusor. Anschließend wird die elektroresistive Struktur temporär mit einer ersten Elektrode und einer zweiten Elektrode kontaktiert. Auf diese Weise kann konduktiv ein Stromfluss durch die elektroresistive Struktur erzwungen werden. Hierfür wird bspw. eine elektrische Spannung zwischen der ersten Elektrode und der zweiten Elektrode angelegt, wodurch ohm'sche Wärme aufgrund des stromdurchflossenen Widerstandes zum Anschmelzen des Kunststoffes des Halters und/oder der Verkleidung führt. Anschließend werden (vor und/oder nach dem Entfernen zumindest einer Elektrode von der elektroresistiven Struktur) der Halter und die Verkleidung zusammengeführt. Beispielsweise kann hierbei der Halter in Richtung der (stillstehenden) Verkleidung bewegt werden. Alternativ kann die Verkleidung zum (stillstehenden) Halter bewegt werden. Dies erfolgt bereits vor dem Erstarren des Kunststoffes. Auf diese Weise gehen der Halter und die Verkleidung eine dauerhaltbare Verbindung ein, sobald der Kunststoff vollständig erstarrt ist.

Die Unteransprüche zeigen bevorzugte Weiterbildungen der Erfindung.

Die elektroresistive Struktur kann bevorzugt nach dem Zusammenführen zwischen dem Halter und der Verkleidung verbleiben, bis der Kunststoff vollständig erstarrt ist. Mit anderen Worten wird die elektroresistive Struktur zum Bestandteil desjenigen Bauteils, welches sowohl den Halter als auch die Verkleidung aufweist.

Die elektroresistive Struktur kann z.B. als elektrischer Draht und/oder als metallisches Stanzteil (z.B. ein ebener oder raumgreifender Blechleiter) ausgestaltet sein. Alternativ oder zusätzlich weist die elektroresistive Struktur eine strukturiert aufgetragene, elektrisch leitfähige Paste auf, deren Gestalt insbesondere einer späteren Anlagefläche zwischen dem Halter und der Verkleidung entspricht. Auf diese Weise kann eine räumlich wohldefinierte Erwärmung des Halters und/oder der Verkleidung erfolgen. Eine Erwärmung nicht zur stoffschlüssigen Verbindung beitragender Bereiche kann verhindert werden. Dies verbessert die optische Erscheinung des Endproduktes und verhindert eine optisch auffällige Strukturierung von Oberflächen, welche der Verbindung abgewandt sind.

Der Halter kann eine Anlagefläche und eine Sensoraufnahme aufweisen, welche eingangs als "Grundplatte" bzw. "Halter" bezeichnet worden sind. Die Anlagefläche kann an eine solche Seite der Verkleidung gefügt werden, welche einem Haupterfassungsbereich bzw. Hauptempfindlichkeitsbereich bzw. Hauptabstrahlbereich des Sensors gegenüberliegend angeordnet ist. Mit anderen Worten ist der Sensor derart rückseitig zur Verkleidung angebracht, dass die Verkleidung (anteilig) im Erfassungsbereich des Sensors liegt. Somit ist der Sensor versteckt angeordnet, wodurch die Gestalt des erfindungsgemäß hergestellten Produktes optische ansprechend und ebenmäßig ist.

Die elektroresistive Struktur kann eine Gestalt aufweisen, welche eine Kreisform umfasst. Alternativ kann eine Ovalform vorgesehen sein. Bspw. kann der Sensor bzw. der Halter derart zu der Kreis- bzw. Ovalform angeordnet werden, dass der Haupterfassungsbereich des Sensors innerhalb des aufzuschmelzenden Bereiches die Verkleidung durchdringt. Die Form der Struktur beeinflusst die Gestalt der späteren Schweißverbindung und kann somit gezielte Versteifungsmuster bewirken. Außerhalb der Kreis- bzw. Ovalform können strahlenförmig aus Richtung eines gemeinsamen (zentralen) Punktes ausgehende Linienstrukturen vorgesehen sein. Auf diese Weise kann die Verbindung zwischen dem Halter und der Verkleidung besonders steif und dauerhaft haltbar ausgestaltet werden. Insbesondere können derartige Versteifungsstrukturen hergestellt werden, welche eine Ausbreitung von Schwingungen (im Falle akustischer Sensoren) in andere Bereiche der Verkleidung dämpfen. Dies ermöglicht eine besonders hochwertige Wandlung empfangener bzw. ausgesandter Signale und eine verminderte Störung und eine hohe Kanaltrennung ggf. zusätzlich an der Verkleidung vorzusehender Sensoren.

Der Halter und/oder die Verkleidung können Durchgangskanäle aufweisen, welche beim Zusammenführen durch angeschmolzenes Material des jeweiligen Fügepartners durchströmt werden. Insbesondere bevorzugt weist der Halter bzw. eine am Halter vorgesehene Grundplatte derartige Durchgangskanäle auf, welche insbesondere senkrecht zur Fügefläche orientiert sind. Die Austrittsseite der Durchgangskanäle kann Hinterschneidungen durch das durchgetretene, angeschmolzene Material erfahren, sodass eine formschlüssige Verbindung den übrigen Stoffschluss ergänzt.

Die elektroresistive Struktur kann eingerichtet sein, selbstständig den Energieeintrag durch die angelegte Spannung dann zu vermindern, wenn die Fügepartner (Halter und Verkleidung) hinreichend nah zusammengeführt und/oder erhitzt worden sind. Bspw. kann eine Sollbruchstelle in der elektroresistiven Struktur vorgesehen sein, welche zu einem Unterbrechen einer elektrischen Verbindung zwischen der ersten Elektrode und der zweiten Elektrode führt, sobald ein weiterer Wärmeeintrag nicht mehr erforderlich ist. Dies kann bspw. durch ein "Durchbrennen" der elektroresistiven Struktur erreicht werden. Alternativ oder zusätzlich kann ein Brechen der elektroresistiven Struktur beim Zusammenführen des Halters und der Verkleidung vorgesehen sein, indem eine (insbesondere temperaturstabile) Struktur im Ansprechen auf ein Erreichen eines vordefinierten Maximalabstandes zwischen der Verkleidung und dem Halter eine Druckkraft auf die elektroresistive Struktur ausübt und selbige hierdurch teilt. Bevorzugt können miteinander mechanisch korrespondierende Strukturen im Halter und in der Verkleidung vorgesehen sein, welche erhebliche Biegemomente auf die elektroresistive Struktur ausüben (im Falle einer als Festkörper ausgestalteten elektroresistiven Struktur) oder ein Auseinanderfließen von Bereichen der elektroresistiven Struktur (z. B. im Falle einer pastösen elektroresistiven Struktur) bewirken. Eine Stützstruktur kann die Unterbrechung der elektroresistiven Struktur zunächst verhindern, jedoch nach dem erforderlichen Wärmeeintrag nachgeben und die Stützung der elektroresistiven Struktur aufgeben, wodurch diese schließlich bricht. Somit kann das Ende des Energieeintrags allein durch den Fügevorgang beim Zusammenführen des Halters und der Verkleidung veranlasst werden, wodurch eine zeitliche Regelung des Energieeintrags erübrigt wird. Somit können bspw. in ein und derselben Vorrichtung unterschiedlich ausgestaltete Halter bzw. Verkleidungen miteinander verschmolzen werden, ohne dass die Vorrichtung den strukturellen Unterschied zur Einstellung eines entsprechenden Parameters erkennen muss.

Die elektroresistive Struktur kann einen T-Träger, eine Spiralform, einen Federring und/oder eine Struktur nach Art eines Schaufelrades/eines Turbinenrades aufweisen, welche eine Hinterschneidung durch angeschmolzenen Kunststoff begünstigt. Insbesondere kann die Hinterschneidung durch eine plastische Verformung der elektroresistiven Struktur erzeugt werden. Insbesondere kann die Hinterschneidung sich im Zuge des Zusammenführens des Halters und der Verkleidung ändern. Bevorzugt kann die Hinterschneidung durch das Zusammenführen verstärkt werden. In besonders geeigneter Weise kann die Hinterschneidung derart erfolgen, dass Bereiche der elektroresistiven Struktur aufgrund der Ohm'schen Wärme nur anteilig erhitzte bzw. angeschmolzene Bereiche eines Fügepartners oder beider Fügepartner hintergreifen. Insbesondere kann also eine Bewegung einer Teilstruktur der elektroresistiven Struktur in parallel zur Fügefläche orientierter Richtung für eine Hinterschneidung sorgen. Bspw. kann sich die elektroresistive Struktur in einem teilweise angeschmolzenen Bereich eines der Fügepartner beim Fügen "hineinschrauben". Die vorstehend genannten Ausgestaltungen ermöglichen eine besonders zuverlässige und dauerhaltbare Verbindung der Fügepartner.

Bevorzugt kann die elektroresistive Struktur ein Federelement umfassen, welches elastisch verformt wird, wenn die Fügepartner zusammengeführt werden. Wenn die elektroresistive Struktur aufgrund des Stromflusses erhitzt und der Halter und/oder die Verkleidung angeschmolzen wird, kann sich das Federelement in eine Ursprungsgestalt begeben, indem der angeschmolzene Kunststoff seiner Kraftwirkung nachgibt. Auf diese Weise kann eine besonders zuverlässige Endgestalt für die elektroresistive Struktur sichergestellt werden. Insbesondere hängt diese nicht oder nur in geringem Maße von dem Vorgang des Zusammenführens der Fügepartner ab. Auch dies führt dazu, dass unterschiedliche Fügepartner auf ein und derselben Fertigungslinie in erfindungsgemäßer Weise gefügt werden können.

Das temporäre Kontaktieren der elektroresistiven Struktur durch die erste und zweite Elektrode kann insbesondere durch das Zusammenführen der Fügepartner erfolgen. Bspw. können die Elektroden verwendet werden, um den Halter und die Verkleidung zusammenzuführen. Zumindest aber kann eine gemeinsame Kinematik für das Zusammenführen sowie für das Kontaktieren der elektroresistiven Struktur verwendet werden.

Bevorzugt kann die Leiterstruktur zunächst als Pulver auf dem Halter und/oder auf der Verkleidung angeordnet und anschließend dort fixiert werden. Das Fixieren kann bspw. mittels eines Lasers und/oder mittels eines Bindemittels (Fluid o. ä.) erfolgen.

Eine mögliche Ausgestaltung für die elektroresistive Struktur kann ein Leiter mit einem T-förmigen Querschnitt, insbesondere einem Doppel-T-förmigen Querschnitt sein.

Alternativ oder zusätzlich kann die elektroresistive Struktur einem Netz, einer Spiralfeder (in Kontaktflächenrichtung oder senkrecht zu dieser gewunden) und/oder einem Schaufelrad nachempfunden sein.

Sofern Durchgangskanäle in mindestens einem der Fügepartner vorgesehen sind, welche durch angeschmolzenen Kunststoff des anderen Fügepartners durchflossen werden, kann ein andrückendes Werkzeug vorgesehen sein, welches nach Art eines Stempels eine Querschnittsverbreiterung der angeschmolzenen Kunststoffmasse nach einem Durchfließen der Durchgangskanäle bewirkt. Nach Art eines Niets ergibt sich auf diese Weise ein Formschluss, der besonders dauerhaft zuverlässig den entstandenen Verbund gegen ein unerwünschtes Auflösen sichert.

Um eine unerwünschte Verformung sichtbarer Oberflächenbereiche der Fahrzeugverkleidung während des erfindungsgemäßen Verfahrens zu verhindern, kann vorgesehen sein, dass eine gut wärmeleitfähige oder sogar aktiv gekühlte Auflage der Fahrzeugverkleidung im Bereich der lokalen elektrischen Erhitzung erfolgt. Somit kann sichergestellt werden, dass eine durchdringende Erhitzung verzögert bzw. verhindert wird und die sichtbare Oberfläche der Fahrzeugverkleidung in ihrer ursprünglichen Gestalt verbleibt.

### Kurze Beschreibung der Zeichnungsfiguren

Nachfolgend werden Ausführungsbeispiele der vorliegenden Erfindung unter Bezugnahme auf die begleitenden Zeichnungen im Detail erläutert. In den Zeichnungen ist:
- Figur 1: eine schematische Seitenansicht veranschaulichend ein mögliches Ergebnis eines erfindungsgemäßen Verfahrens;
- Figur 2: eine Seitenansicht veranschaulichend erste Schritte eines Ausführungsbeispiels eines erfindungsgemäßen Verfahrens;
- Figur 3: eine Seitenansicht veranschaulichend weitere Schritte eines Ausführungsbeispiels eines erfindungsgemäßen Verfahrens;
- Figur 4: eine schematische Skizze veranschaulichend ein erstes Ausführungsbeispiel einer räumlichen Erstreckung einer erfindungsgemäß verwendbaren elektroresistiven Struktur;
- Figur 5: eine schematische Skizze veranschaulichend ein zweites Ausführungsbeispiel einer räumlichen Erstreckung einer erfindungsgemäß verwendbaren elektroresistiven Struktur
- Figur 6a: eine Prinzipskizze einer federelastischen Ausführung einer elektroresistiven Struktur in einem beim Zusammenführen deformierten Zustand;
- Figur 6b: eine Prinzipskizze eines Ausführungsbeispiels einer elektroresistiven Struktur gemäß Figur 6a nach einem Zurückkehren in ihren Ursprungszustand;
- Figur 7: eine Prinzipskizze veranschaulichend einen durch Durchgangskanäle hergestellten Formschluss eines Halters und einer Verkleidung gemäß einem weiteren Ausführungsbeispiel einer erfindungsgemäßen Anordnung;
- Figur 8: eine geschnittene Seitenansicht eines Ausführungsbeispiels eines Formschlusses gemäß einem weiteren Ausführungsbeispiel einer erfindungsgemäßen Anordnung;
- Figur 9: eine prinzipielle Seitendarstellung eines Ausführungsbeispiels einer elektroresistiven Struktur mit einem federnden Abstandshalter vor einem Zusammenfügen; und
- Figur 10: eine prinzipielle Seitendarstellung eines Ausführungsbeispiels einer elektroresistiven Struktur mit einem federnden Abstandshalter nach einem Zusammenfügen.

### Ausführungsformen der Erfindung

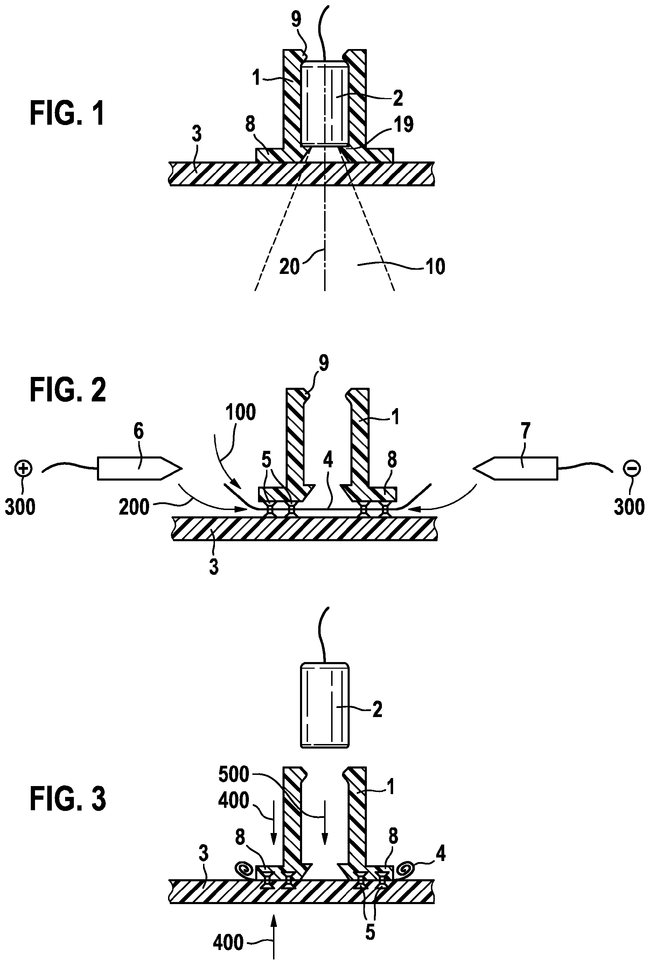

Figur 1 zeigt einen Ultraschallsensor 2 als Beispiel eines Sensors, welcher in einem Halter 1 angeordnet und durch diesen an einer Fahrzeugverkleidung 3 als Beispiel einer Verkleidung eines Fortbewegungsmittels (nicht dargestellt) ist. Der Halter 1 weist eine Anlagefläche 8 auf, welche erfindungsgemäß mit der Fahrzeugverkleidung 3 verschweißt ist. Die federelastischen Strukturen der Sensoraufnahme 9 fixieren den Ultraschallsensor 2 gegenüber einer in Richtung der Fahrzeugverkleidung 3 vorgesehenen Stützstruktur 19. Derart angeordnet ist der Ultraschallsensor 2 eingerichtet, einen Erfassungsbereich 10 jenseits der Fahrzeugverkleidung 3 aufzuspannen bzw. Ultraschallsignale in den Erfassungsbereich 10 abzustrahlen. Die Hauptachse 20 des Ultraschallsensors 2 ist somit im Wesentlichen senkrecht zur Anlagefläche 8 orientiert.

Figur 2 zeigt eine Darstellung erster Fertigungsschritte 100 bis 300 bei der Fertigung einer in Figur 1 dargestellten Anordnung. Zunächst wird im Fertigungsschritt 100 zwischen die Verkleidung 3 und den Halter 1 eine vordefinierte elektroresistive Struktur eingebracht, welche einen elektrischen Leiter 4 und Doppel-T-Profile 5 aufweist. Der elektrische Leiter 4 wird in Fertigungsschritt 200 durch eine erste Elektrode 6 und eine zweite Elektrode 7 elektrisch kontaktiert. Hierzu werden die Elektroden 6, 7 an distale Enden des elektrischen Leiters 4 herangeführt. Im Fertigungsschritt 300 wird eine elektrische Spannung an die Elektroden 6, 7 angeschlossen.

Figur 3 zeigt weitere Fertigungsschritte, welche sich an die in Verbindung mit Figur 2 dargestellten und erläuterten Fertigungsschritte 100 bis 300 anschließen. In Schritt 400 wird der Halter 1 mit der Verkleidung 3 zusammengeführt. Aufgrund der Tatsache, dass die Doppel-T-Strukturen 5 und der elektrische Leiter 4 die einander zugewandten Oberflächen der Verkleidung 3 sowie der Anlagefläche 8 geschmolzen haben, dringen die Doppel-T-Strukturen 5 sowohl in die Fahrzeugverkleidung 3 sowie den Halter 1 ein und werden vom angeschmolzenen Kunststoff umströmt. Auf diese Weise bildet sich ein Formschluss aus, welcher nach einem Erstarren des Kunststoffs für eine andauernde und somit sichere Verbindung führt. In Schritt 500 wird schließlich der Ultraschallsensor 2 in den Halter 1 eingesteckt, was ebenfalls in Hauptabstrahlrichtung des Ultraschallsensors 2 erfolgt.

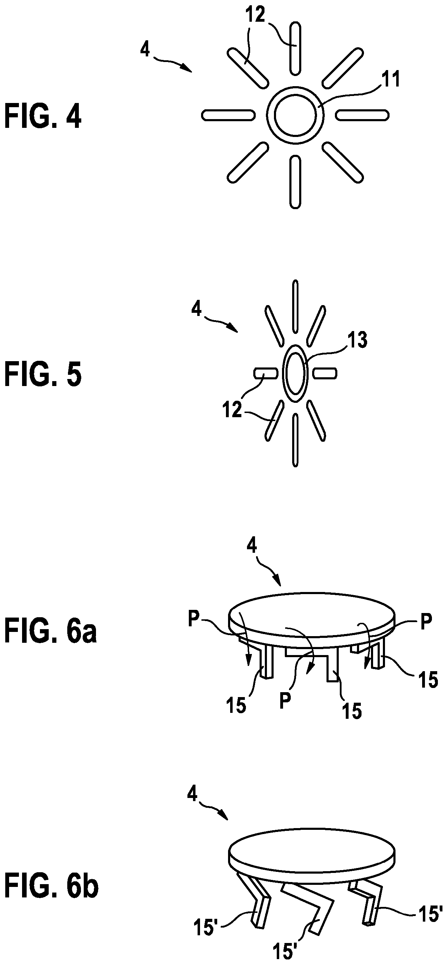

Figur 4 zeigt ein Muster einer elektroresistiven Struktur 4, welches mittig eine kreisringförmige Struktur 11 und von einem Mittelpunkt des Kreisrings in radialer Richtung verlaufende Strahlensegmente 12 außerhalb des Kreisrings aufweist. Die Strahlensegmente 12 versteifen den Bereich des Halters 1 bzw. der Verkleidung 3 außerhalb der kreisringförmigen Struktur 11. Die kreisringförmige Struktur 11 bietet in ihrem Auge eine nicht durch die thermische Erwärmung beeinflusste Fläche, durch welche der Ultraschallsensor 2 mit geringstmöglicher Dämpfung den Erfassungsbereich 10 aufspannen kann.

Figur 5 zeigt ein Muster eines Ausführungsbeispiels einer elektroresistiven Struktur 4, bei welcher statt einem in Figur 4 dargestellten Kreisringsegment eine Ovalstruktur 13 vorgesehen ist. Aufgrund dieser Ausgestaltung ist die Begrenzung der schwingungsfähigen Fläche in der Senkrechten nicht so eng wie in der Waagerechten, wodurch bekannterweise die Richtcharakteristik bei akustischen Sensoren vorteilhaft beeinflusst werden kann.

Anstatt - wie in den Figuren 4 und 5 zeichnerisch dargestellt - die Kreis- bzw. Ovalstruktur 11, 13 räumlich getrennt von den strahlenförmigen Strukturen 12 zu fertigen, können die Strahlen in Richtung ihres gemeinsamen Mittelpunktes konjunkt mit der Kreis- bzw. Ovalstruktur 11, 13 ausgeführt werden.

Figur 6a zeigt eine Ausführungsform einer elektroresistiven Struktur 4, welche federelastisch ausgestaltet ist. Die elektroresistive Struktur 4 ist ringförmig ausgestaltet, wobei Schaufeln 15 nach Art eines Turbinenrotors in Umfangsrichtung verteilt vorgesehen sind. Indem die Schaufeln 15 an die Ringstruktur aufgrund des Zusammenführens des (nicht dargestellten) Halters und der (nicht dargestellten) Verkleidung angeklappt sind, ist ein einfaches Eindringen der Schaufeln 15 in angeschmolzene Kunststoffbereiche möglich. Pfeile P kennzeichnen eine Richtung, in welche die Schaufeln 15 hierbei streben.

Figur 6b zeigt diejenige Form, in welche die in Figur 6a dargestellte elektroresistive Struktur 4 strebt bzw. sich nach hinreichend umfassendem Anschmelzen des Kunststoffes (in ihre Ausgangsform) verformt. Erkennbar weisen die Schaufeln 15 nun einen Formschluss mit dem angeschmolzenen Kunststoff auf, sofern man davon ausgeht, dass sich die Anlagefläche bzw. die Verkleidung 3 in vertikaler Richtung (sh. Figuren 1 bis 3) einander gegenüberliegen.

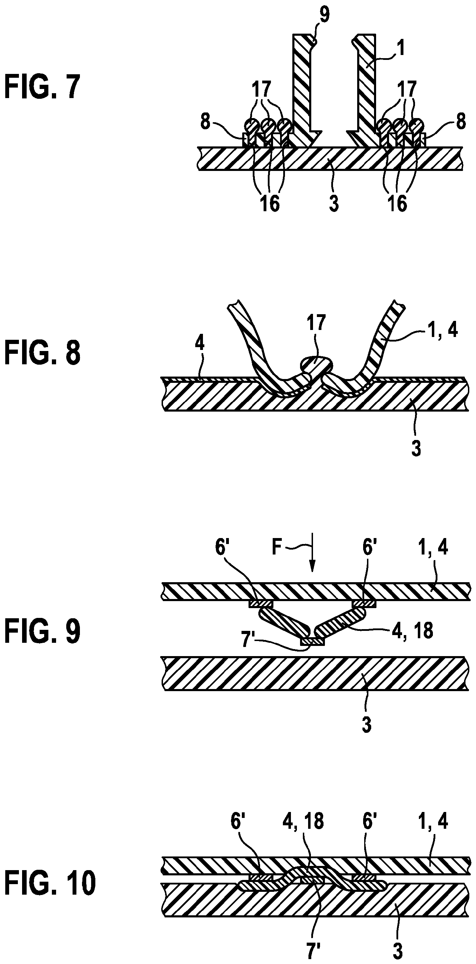

Figur 7 zeigt eine geschnittene Seitenansicht eines Ausführungsbeispiels einer erfindungsgemäß hergestellten Anordnung, bei welcher die Anlagefläche 8 Durchgangslöcher 16 aufweist, durch welche geschmolzenes Kunststofffluid geströmt ist. Jenseits der Anlagefläche 8 wurde durch einen (nicht dargestellten) Stempel eine Aufweitung 17 des Kunststoffes noch vor dem Erstarren bewirkt, wodurch sich ein Formschluss nach Art von Nieten ergibt.

Figur 8 zeigt ein weiteres Ausführungsbeispiel einer erfindungsgemäßen Anordnung bzw. Verbindungsstelle zwischen einer Fahrzeugverkleidung 3 und einem Halter 1. Der Halter 1 selbst ist als elektroresistive Struktur 4 ausgestaltet. Die Oberfläche der Verkleidung weist eine leitfähige Paste als elektroresistive Struktur 4 auf. Vor einem Zusammenführen des Halters 1 und der Fahrzeugverkleidung 3 wird also dafür gesorgt, dass unterschiedliche Möglichkeiten zum Anlegen einer elektrischen Spannungsdifferenz gegeben sind, um bspw. durch unterschiedliche Vorrichtungen erhitzt und zusammengeführt zu werden. Aufgrund der angelegten Spannungsdifferenz zwischen dem Halter 1 und der elektroresistiven Struktur 4 auf der Fahrzeugverkleidung 3 schmilzt die Fahrzeugverkleidung 3 an der Kontaktstelle und die Schmelze verbindet sich durch Ausbildung einer Aufweitung 17 formschlüssig mit dem Halter 1. Um die Aufweitung 17 zu provozieren, kann ein Stempel (nicht dargestellt) verwendet werden.

Figur 9 zeigt ein weiteres Ausführungsbeispiel eines erfindungsgemäßen Verfahrens, bei welchem am Halter 1 ein Widerstands-Schmelzmittel als elektroresistive Struktur 4 vorgesehen ist, welche an einem der Fahrzeugverkleidung 3 zugewandten Ende durch einen federnden Abstandshalter 18 abgeschlossen ist. Gegenüber den Elektroden 6' wird ein anderes elektrisches Potenzial an der Elektrode 7' angelegt, wodurch eine elektrische Spannung entsteht.

Figur 10 zeigt die in Figur 9 dargestellte Anordnung nach einem Zusammenführen der Fahrzeugverkleidung 3 und des Halters 1. Hierbei wird die elektroresistive Struktur 4 derart verformt, dass sich ein Stromfluss zwischen den Elektroden 6', 7' ausbildet, welcher zum Anschmelzen des Halters 1 und der Fahrzeugverkleidung 3 führt. In der dargestellten Anordnung wirkt die elektroresistive Struktur 4 als Schalter, welcher im Ansprechen auf das Erreichen einer hinreichenden Andruckkraft zwischen dem Halter 1 und der Fahrzeugverkleidung 3 einen Stromfluss zulässt. Auf diese Weise wird der Stromfluß im Ansprechen auf das Erreichen einer Maximalentfernung zwischen der Fahrzeugverkleidung 3 und dem Halter 1 automatisch eingeschaltet. Durch das Aufschmelzen auch der elektroresistiven Struktur 4 vergrößert sich der elektrische Widerstand, bis auch der elektroresistive Wärmeeintrag automatisch reduziert wird. Alternativ kann die elektroresistive Struktur 4 auch anderweitig ihre Leitfähigkeit verändern (z. B. indem der (z.B. halbleitende) Widerstand thermisch zerstört wird).

## Patentansprüche

1. Verfahren zur Befestigung eines Halters (1) für einen Sensor (2) an einer Verkleidung (3) für ein Fortbewegungsmittel, wobei der Halter (1) und/oder die Verkleidung (3) zumindest anteilig aus Kunststoff gefertigt ist bzw. sind, umfassend die Schritte:
- Aufbringen (100) einer vordefinierten elektroresistiven Struktur (4) auf den Halter (1) und/oder die Verkleidung (3),
- temporäres Kontaktieren (200) der elektroresistiven Struktur (4) mit einer ersten Elektrode (6) und einer zweiten Elektrode (7),
- Anlegen (300) einer elektrischen Spannung zwischen der ersten Elektrode (6) und der zweiten Elektrode (7) zum Anschmelzen des Kunststoffes des Halters (1) und/oder der Verkleidung (3) und
- Zusammenführen (400) des Halters (1) und der Verkleidung (3).

2. Verfahren nach Anspruch 1, wobei die elektroresistive Struktur (4) nach dem Zusammenführen zwischen dem Halter (1) und der Verkleidung (3) bis nach einem Erstarren des Kunststoffes verbleibt.

3. Verfahren nach Anspruch 1 oder 2, wobei die elektroresistive Struktur (4)
- eine Paste und/oder
- einen Drahtleiter und/oder
- einen Blechleiter
umfasst.

4. Verfahren nach einem der vorstehenden Ansprüche, wobei der Halter (1) eine Anlagefläche (8) und eine Sensoraufnahme (9) aufweist, wobei die Anlagefläche (8) an eine solche Seite der Verkleidung (3) gefügt wird, welche einem Haupterfassungsbereich (10) des Sensors (2) gegenüber liegt.

5. Verfahren nach einem der vorstehenden Ansprüche, wobei die elektroresistive Struktur (4) eine Gestalt aufweist, welche
- eine Kreisform (11) und/oder
- eine Ovalform (13) und/oder
- strahlenförmig aus Richtung eines gemeinsamen Punktes ausgehende Linienstrukturen (12)
umfasst.

6. Verfahren nach einem der vorstehenden Ansprüche, wobei der Halter (1) und/oder die Verkleidung (3) Durchgangskanäle aufweist bzw. aufweisen, welche beim Zusammenführen durch angeschmolzenes Material des jeweils anderen Fügepartners durchströmt werden, wobei sich insbesondere an einer Austrittsseite der Durchgangskanäle Hinterschneidungen (17) durch das angeschmolzene Material ausbilden.

7. Verfahren nach einem der vorstehenden Ansprüche, wobei die elektroresistive Struktur (4) eingerichtet ist, nach einem zum Anschmelzen erforderlichen Energieeintrag eine verminderte Leitfähigkeit bezüglich der ersten Elektrode (6) und der zweiten Elektrode (7) aufzuweisen.

8. Verfahren nach einem der vorstehenden Ansprüche, wobei die elektroresistive Struktur (4) eingerichtet ist, nach einem zum Anschmelzen erforderlichen Energieeintrag eine Position und/oder eine Gestalt derart zu verändern, dass sie der ersten Elektrode (5) und zweiten Elektrode (6) ausweicht und ein elektrischer Kontakt zur ersten Elektrode (5) und/oder zweiten Elektrode (6) unterbrochen wird.

9. Verfahren nach einem der vorstehenden Ansprüche, wobei die elektroresistive Struktur (4) eine bezüglich einer Richtung des Zusammenführens ausgestaltete Hinterschneidung aufweist.

10. Verfahren nach einem der vorstehenden Ansprüche, wobei die elektroresistive Struktur (4) ein Federelement (15) umfasst, welches im Zuge des Zusammenführens elastisch verformt wird und nach Anschmelzen des Halters (1) und/oder der Verkleidung (3) eine vorherige Form wieder annimmt.

11. Verfahren nach einem der vorstehenden Ansprüche, wobei das temporäre Kontaktieren im Zuge des Zusammenführens, insbesondere durch das Zusammenführen, erfolgt.

## Claims

1. Method for attaching a holder (1) for a sensor (2) on a cladding (3) for a means of locomotion, wherein the holder (1) and/or the cladding (3) is or are at least partly produced from plastic, comprising the steps of:
- applying (100) a predefined electroresistive structure (4) to the holder (1) and/or the cladding (3),
- temporarily contacting (200) the electroresistive structure (4) with a first electrode (6) and a second electrode (7),
- applying (300) an electric voltage between the first electrode (6) and the second electrode (7) for initial melting of the plastic of the holder (1) and/or of the cladding (3) and
- bringing together (400) the holder (1) and the cladding (3).

2. Method according to Claim 1, wherein the electroresistive structure (4) remains until the plastic has solidified after the holder (1) and the cladding (3) have been brought together.

3. Method according to Claim 1 or 2, wherein the electroresistive structure (4) comprises
- a paste and/or
- a wire conductor and/or
- a sheet-metal conductor.

4. Method according to one of the preceding claims, wherein the holder (1) has a bearing surface (8) and a sensor receptacle (9), wherein the bearing surface (8) is joined to such a side of the cladding (3) that is opposite from the main sensing area (10) of the sensor (2).

5. Method according to one of the preceding claims, wherein the electroresistive structure (4) has a form which comprises
- a circular shape (11) and/or
- an oval shape (13) and/or
- linear structures (12) extending radially from the direction of a common point.

6. Method according to one of the preceding claims, wherein the holder (1) and/or the cladding (3) has or have passageways which, while they are being brought together, are flowed through by initially melted material of the other part respectively being joined, wherein undercuts (17) are formed, in particular on an outlet side of the passageways, by the initially melted material.

7. Method according to one of the preceding claims, wherein the electroresistive structure (4) is designed to have a reduced conductivity with respect to the first electrode (6) and the second electrode (7) after an input of energy required for the initial melting.

8. Method according to one of the preceding claims, wherein the electroresistive structure (4) is designed to change a position and/or a form after an input of energy required for the initial melting in such a way that it evades the first electrode (5) and the second electrode (6) and an electrical contact with the first electrode (5) and/or second electrode (6) is interrupted.

9. Method according to one of the preceding claims, wherein the electroresistive structure (4) has an undercut configured with respect to a direction in which the parts are brought together.

10. Method according to one of the preceding claims, wherein the electroresistive structure (4) comprises a spring element (15), which in the course of bringing the parts together is elastically deformed and after the initial melting of the holder (1) and/or the cladding (3) resumes a previous shape.

11. Method according to one of the preceding claims, wherein the temporary contacting takes place in the course of bringing the parts together, in particular by bringing them together.

## Revendications

1. Procédé de fixation d'un support (1) pour un capteur (2) sur un revêtement (3) pour un moyen de locomotion, dans lequel le support (1) et/ou le revêtement (3) est/sont au moins partiellement en matière plastique, comprenant les étapes consistant à :
- déposer (100) une structure électrorésistive prédéfinie (4) sur le support (1) et/ou sur le revêtement (3),
- mettre en contact temporairement (200) la structure électrorésistive (4) avec une première électrode (6) et une seconde électrode (7),
- appliquer (300) une tension électrique entre la première électrode (6) et la seconde électrode (7) pour faire fondre la matière plastique du support (1) et/ou du revêtement (3), et
- assembler (400) le support (1) et le revêtement (3).

2. Procédé selon la revendication 1, dans lequel la structure électrorésistive (4) reste entre le support (1) et le revêtement (3) après l'assemblage jusqu'à ce que la matière plastique se soit solidifiée.

3. Procédé selon la revendication 1 ou 2, dans lequel la structure électrorésistive (4) comprend
- une pâte et/ou
- un fil conducteur et/ou
- une tôle conductrice.

4. Procédé selon l'une des revendications précédentes, dans lequel le support (1) comporte une surface d'appui (8) et un réceptacle de capteur (9), dans lequel la surface d'appui (8) est reliée à un côté du revêtement (3) qui est opposé à une zone de détection principale (10) du capteur (2).

5. Procédé selon l'une des revendications précédentes, dans lequel la structure électrorésistive (4) présente une forme qui comprend
- une forme circulaire (11) et/ou
- une forme ovale (13) et/ou
- des structures linéaires (12) partant d'un point commun.

6. Procédé selon l'une des revendications précédentes, dans lequel le support (1) et/ou le revêtement (3) comporte ou comportent des conduits traversants dans lesquels s'écoule le matériau fondu de l'autre élément de jonction complémentaire respectif lors de l'assemblage, dans lequel des contre-dépouilles (17) sont formées par le matériau fondu, en particulier sur un côté de sortie des conduits traversants.

7. Procédé selon l'une des revendications précédentes, dans lequel la structure électrorésistive (4) est conçue pour présenter une conductivité réduite par rapport à la première électrode (6) et à la seconde électrode (7) après un apport d'énergie nécessaire à la fusion.

8. Procédé selon l'une des revendications précédentes, dans lequel la structure électrorésistive (4) est conçue pour modifier une position et/ou une forme après un apport d'énergie nécessaire à la fusion, de manière à ce qu'elle s'écarte de la première électrode (5) et de la seconde électrode (6) et qu'un contact électrique avec la première électrode (5) et/ou la seconde électrode (6) soit interrompu.

9. Procédé selon l'une des revendications précédentes, dans lequel la structure électrorésistive (4) présente une contre-dépouille formée par rapport à une direction de l'assemblage.

10. Procédé selon l'une des revendications précédentes, dans lequel la structure électrorésistive (4) comprend un élément élastique (15) qui se déforme élastiquement au cours de l'assemblage et qui, après que le support (1) et/ou le revêtement (3) a/ont fondu, reprend une forme antérieure.

11. Procédé selon l'une des revendications précédentes, dans lequel la mise en contact temporaire est effectuée au cours de l'assemblage, en particulier sous l'effet de l'assemblage.
